(19) **Europäisches Patentamt**

**European Patent Office**

**Office européen des brevets**

(11) **EP 1 342 578 B1**

(12) **EUROPEAN PATENT SPECIFICATION**

(45) Date of publication and mention
of the grant of the patent:
**08.02.2006 Bulletin 2006/06**

(51) Int Cl.:
***B41J 2/21*** (2006.01)

(21) Application number: **03005157.7**

(22) Date of filing: **07.03.2003**

(54) **Printing system generating multichrome print data from monochrome print data**

Drucksysten zum erzeugen von multichromatischen Druckdaten aus monochromatischen Druckdaten

Système d'impression générant des données multichromes à partir de données monochromes

(84) Designated Contracting States:
**AT BE BG CH CY CZ DE DK EE ES FI FR GB GR
HU IE IT LI LU MC NL PT RO SE SI SK TR**

(30) Priority: **08.03.2002 JP 2002063863
18.03.2002 JP 2002074892**

(43) Date of publication of application:
**10.09.2003 Bulletin 2003/37**

(73) Proprietor: **SEIKO EPSON CORPORATION
Shinjuku-ku,
Tokyo 163-0811 (JP)**

(72) Inventor: **Minowa, Masahiro
Suwa-shi,
Nagano-ken 392-8502 (JP)**

(74) Representative: **Hoffmann, Eckart
Patentanwalt,
Bahnhofstrasse 103
82166 Gräfelfing (DE)**

(56) References cited:
**WO-A-02/13131          US-A- 4 990 009
US-A- 5 572 599          US-A- 5 805 196**

EP 1 342 578 B1

**Description**

The present invention relates generally to a printing system capable of printing in two or more colors, preferably in multiple colors and to a printing method for the same.

POS (Point Of Sale) systems used at check-out registers have a printer for printing receipts. These POS printers print the name and price of each purchased product line by line on the printing medium, typically roll paper, and the printed paper is then cut off and issued as a receipt. The customer receiving this receipt may later transfer product name and price information from the receipt to a home budget ledger, for example, to keep the ledger as a personal record of past purchases. Most such receipts are printed with one color, often making the printed content difficult to read. Errors can thus easily occur when transferring information from the receipt to the ledger.

In the last few years inkjet and thermal transfer color printers for use with personal computers have become widely available. Color printers capable of printing two or more colors for use with POS systems are also becoming more common. Using these printers to print receipts in color can make the receipts easier to read and is thus desirable for improved customer service.

Many application programs used in POS systems, however, were made assuming that a conventional monochrome printer would be used. This means that color receipts cannot be printed by simply replacing the existing monochrome printer with a color printer because the application program itself must be modified for color printing. Changing the program is typically costly, and the financial burden on the POS user, that is, store, is thus great.

It is therefore desirable to be able to print color receipts with a color printer while continuing to use existing application programs that presume use of a monochrome printer.

In addition to text data such as product names and price information, such printers are also used to print images such as the store's logo. For the content printed on the receipts, it is usually necessary to print the store's logo and other such image data in the color specified by the store. It is therefore further desirable when printing color receipts to separately define how color is used to print text data and image data. It is yet further desirable for the user to be able to specify how and what colors are used for the color print data.

US-A-5,572,599 discloses a technique to make the architecture of an image processing module of a monochrome printing machine convertible to a full color printing machine. The converted full color system utilizes the luminance processing system of the monochrome system to realize fully color processed signals ready for transmission to a printing subsystem. Hence, this prior art is related to the problem of how to convert a machine capable of processing monochrome data to a machine capable of processing color data.

The present invention is directed to solving these problems, and an object of the invention is to enable printing in two or more colors, preferably, in multiple colors based on monochrome print data.

A further object of the invention is to enable printing in two or more colors while distinguishing between image and text data based on print data for monochrome printing.

A yet further object of the invention is to enable the user to set color assignments for producing print data for printing in two or more colors from print data for monochrome printing.

These objects are achieved by a printing system as claimed in claim 1, a method as claimed in claims 13, a program as claimed in claim 15 and a machine-readable storage medium as claimed in claim 16, respectively. Preferred embodiments of the invention are subject-matter of the dependent claims.

By producing color print data, i.e., multichrome print data, by means of the print data processing means applying a colorization process to monochrome print data, the present invention allows printing two or more colors based on monochrome print data.

A POS system containing a printing system according to the present invention has a POS application execution unit for tabulating sales information based on product information input from a specific input device and outputting print data for receipt printing. The monochrome print data is print data output from the POS application execution unit for printing receipts.

Other objects and attainments together with a fuller understanding of the invention will become apparent and appreciated by referring to the following description of preferred embodiments taken in conjunction with the accompanying drawings, in which:

Fig. 1    is a block diagram of a POS system according to a first embodiment of the present invention;

Fig. 2    is a function block diagram of a printer used in the first embodiment of the invention;

Fig. 3    is a function block diagram of a host for implementing a colorization function in the first embodiment;

Fig. 4    shows an example of the colorization information as used in the first embodiment;

Fig. 5    shows a sample printout of a receipt obtainable by the first embodiment;

Fig. 6    is a flow chart of a program implementing the data processing part and the command output part in the first embodiment;

Fig. 7    is a flow chart of the colorization process of the first embodiment in detail;

Fig. 8    shows an example of a basic setup window in the first embodiment;

Fig. 9    shows an example of a color conversion settings window in the first embodiment;

Fig. 10   shows an example of the colorization information as used in a first modification of the first embodiment;

Fig. 11   shows an example of a conversion settings window for the first modification of the first embodiment;

Fig. 12   shows an example of the colorization information for a printer capable printing in three colors in accordance with a second modification of the first embodiment;

Fig. 13   shows an example of a conversion settings window for the second modification of the first embodiment;

Fig. 14   is a block diagram of a POS system according to a second embodiment of the present invention;

Fig. 15   shows an example of the colorization information in the second embodiment;

Fig. 16   is a flow chart of a process run by the data processing part when the colorization function is enabled in the second embodiment;

Fig. 17   is a flow chart of a colorization process for text data in the second embodiment; and

Fig. 18   shows an example of a setup screen for setting the colorization information on the host in the second embodiment.

<u>Embodiment 1</u>

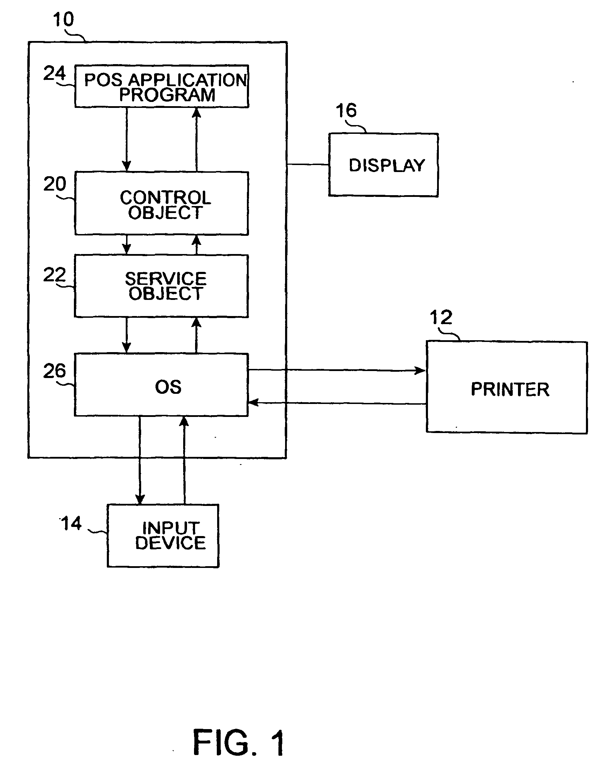

Fig. 1 is a block diagram of a POS system according to a first embodiment of the present invention. As shown in Fig. 1 the POS system according to this first embodiment has a host 10. Connected to the host 10 are a printer 12, one or more input devices 14 (such as a keyboard, a barcode reader and a pointing device) for entering, e.g., product codes, and a display device 16 for displaying information and prompts.

In this first embodiment, particular reference will be made to an inkjet printer as one example of a printer capable of printing two colors, a first (main) color, e.g. black, and a second color (subcolor), e.g., red or blue. The printer 12 is used to print receipts as controlled by the host 10. As further described below, the printer 12 is not limited to a two-color printer and could be a printer capable of printing three or more colors. The printer 12 is also not limited to an inkjet printer, and could be a thermal transfer printer or any other type of printer capable of printing in two or more colors.

The host 10 is a computer system that controls the printer 12 by means of a printer driver, for example, a so-called OPOS (OLE for Retail POS) or JavaPOS® (Java for Retail POS) that runs under an OS (Operating System) such as Windows® . Printer drivers function as a device-independent interface between a POS application program 24 running under the OS and peripheral devices. To achieve this functionality, printer drivers typically comprise a device control object for each device category, such as printer, display device, input device etc., and a device service object for each device model. The printer driver has a printer control object 20 for the device category "printer" and a service object 22 for each printer model.

The POS application program 24 tabulates sales data for the purchased products based on corresponding product codes input by means of the input device 14, and outputs print data for printing the tabulated data as a receipt. The print data output from the POS application program 24 is passed to the printer control object 20, and is passed from the control object 20 to the service object 22 corresponding to the particular printer 12 model. The service object 22 processes the print data for the printer to generate a print command according to the command specifications of the printer 12, and then sends the print command to the printer 12 through the OS 26. The service object 22 thus absorbs differences between different printer models, and thus enables the POS application program 24 to be written as a program that is not dependent on a particular printer model.

A printer 12 according to this first embodiment is designed so that it can interpret and execute two types of print command, a text print command and an image print command.

A text print command is a command for printing text. The text color (print color of text), a text background pattern, and the background color can be specified in the text print command in this first embodiment. Selectable background patterns include, for example, a halftone pattern, a diagonal striping, a crosshatch, and a solid fill, and the density of the background pattern can be specified as dark, medium, or light, for example.

The image print command is a command for printing graphical images. In this first embodiment the image print command can be used to specify the image color (print color of the image) and to select image data pre-stored in the printer 12 for printing as the print image.

It will be obvious that these commands are described by way of example only, and other command formats can be used as far as the print command can send equivalent printing instructions to the printer 12. More specifically, any command system that can send text and image printing instructions to the printer 12, and can specify the print color, background pattern, and background color for text and the print color for images can be used.

The print data passed to the printer control object 20 from the POS application program 24 in this first embodiment is in a data format that distinguishes between print data for text (i.e., text data such as the product name and price information to be printed on the receipts) and print data for images (such as a store logo). The service object 22 determines whether the print data passed from the control object 20 is text data or image data and, based on the result, generates and passes to the printer 12 either a text print command or an image print command. The printer 12 runs a printing process according to the print command sent from the service object 22.

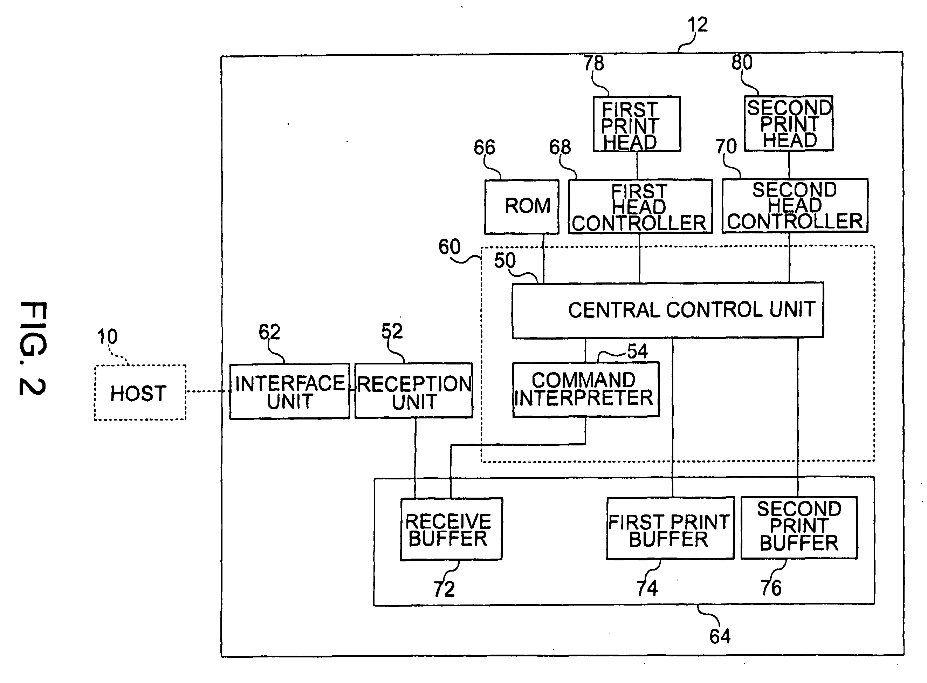

Fig. 2 is a function block diagram of the printer 12. As shown in this figure the printer 12 has a CPU 60, an interface unit 62 and a reception unit 52. The CPU 60 has a central control unit 50 and a command interpreter 54. The command interpreter 54 interprets commands and data received from the host 10 through the interface unit 62 and the reception unit 52, and the central control unit 50 then runs a process appropriate to the interpreted command. It should be noted that the central control unit 50 and command interpreter 54 can be implemented by the CPU 60 running a specific control program.

Connected to the CPU 60 are RAM 64, ROM 66, a first head controller 68, and a second head controller 70.

Disposed in the RAM 64 are a receive buffer 72, a first print buffer 74, and a second print buffer 76. Commands and data received by the reception unit 52 from the host 10 are stored in the receive buffer 72. Print data to be printed in the first color is stored in the first print buffer 74, and print data to be printed in the second color is stored in the second print buffer 76.

Programs run by the CPU 60, bit patterns for each character of text data, and image data for a logo and other print images are stored in ROM 66.

A first print head 78 and a second print head 80 are connected respectively to the first head controller 68 and the second head controller 70. The first print head 78 is used to print the first color and the second print head 80 is used to print the second color. More specifically, the first print head 78 and the second print head 80 print the print data stored in the first print buffer 74 and second print buffer 76 in the respective color as controlled by the first head controller 68 and the second head controller 70, respectively.

Based on commands interpreted by the command interpreter 54, the central control unit 50 stores print data in the first print buffer 74 and the second print buffer 76. More specifically, if the command is a text print command, the bit pattern data for the characters to be printed is read from ROM 66 and the bit pattern data is stored in the first print buffer 74 if the print color is the first color, and in the second print buffer 76 if the print color is the second color. If background printing is also specified in the text print command, bit pattern data for the indicated background pattern and density is stored in the first print buffer 74 or the second print buffer 76 appropriately according to the background color. Likewise if an image print command is received the image print data, i.e. the bit pattern data for the image, to be printed is read from ROM 66 and is stored in the first print buffer 74 or the second print buffer 76 according to the print color, similar to storing the text print data. Printing in two colors, i.e., the first color and the second color, can then be done by supplying the print data from the first print buffer 74 and the second print buffer 76 to the first head controller 68 and the second head controller 70, respectively.

A POS system according to this first embodiment thus has a function for two-color printing with this printer 12 by generating a print command adding a second color to the monochrome print data output from the POS application program 24. This function is referred to herein as a "colorization function". It should be understood that this term "colorization function" also applies to the case that all of text is printed in one color, for instance the first color, while an image is printed in the other color.

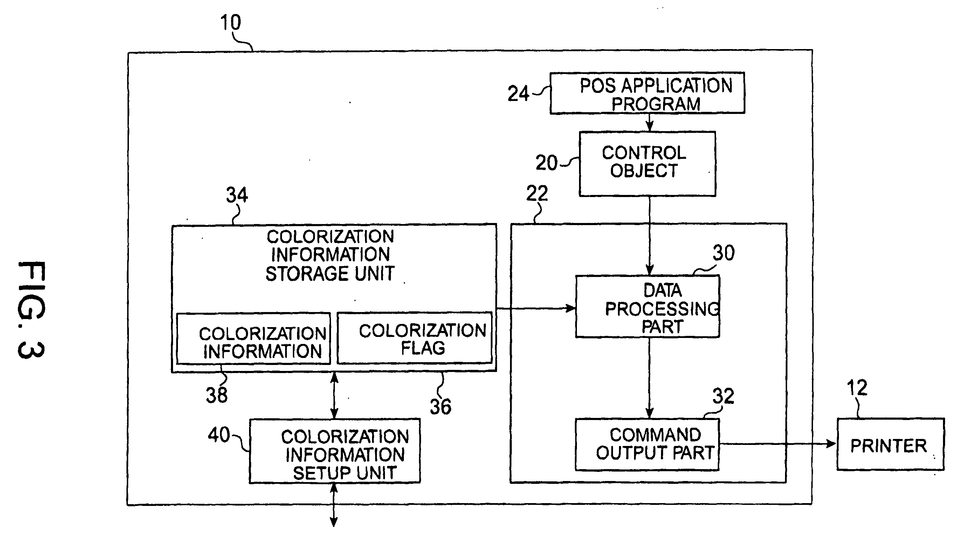

Fig. 3 is a function block diagram illustrating parts of host 10 that implement this colorization function. As shown in the figure the service object 22 has a data processing part 30 and a command output part 32. The data processing part 30 runs a process for adding a second color to the monochrome print data passed from the control object 20 (a process called the "colorization process" below), and generates a print command according to the command specifications of the printer 12. The resulting print command is then output from the command output part 32 to the printer 12.

As shown in Fig. 3 a colorization information storage unit 34 is also provided in the host 10. A colorization flag 36 indicating whether or not to enable the colorization process, and colorization information 38 specifying the details of the colorization process, are stored as definition data (e.g., in the form of a definition data file) in the colorization information storage unit 34. The colorization information storage unit 34 is provided on a rewritable nonvolatile storage such as a hard disk drive or EEPROM.

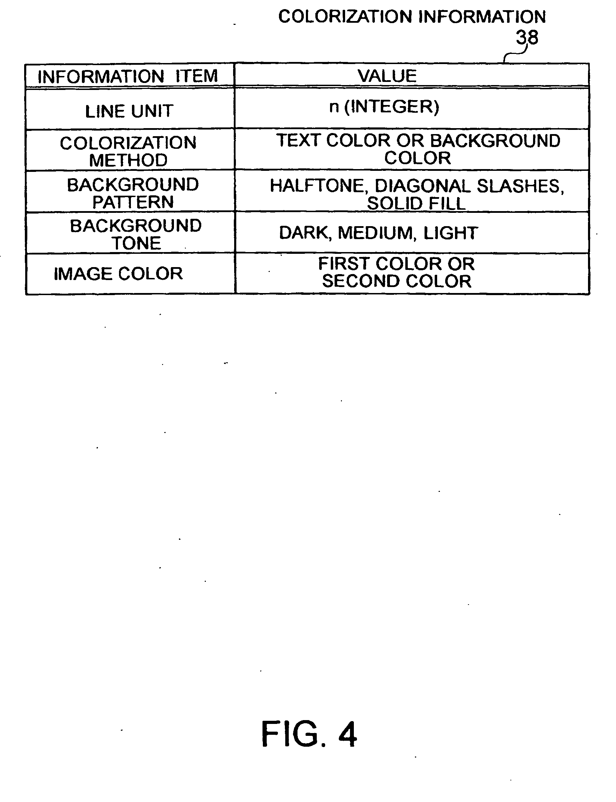

Fig. 4 shows an example of the colorization information 38. As shown in this figure the colorization information 38 includes a plurality of information items, namely: line unit, colorization method, background pattern, background tone, and image color in this example. These information items are further described below.

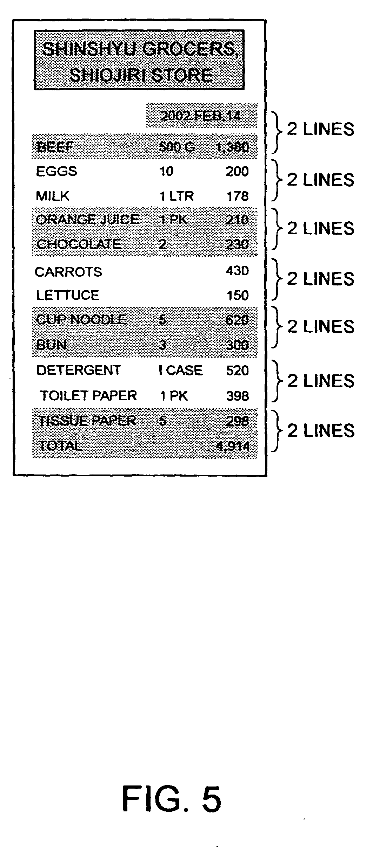

(1) *Line unit:* Denotes the number of lines of text data to which the colorization process is to be applied as one block. For example, if the line unit is set to 2, the colorization process is alternately applied to two lines and not applied to the next two lines as shown in Fig. 5.

(2) *Colorization method:* Defines whether the colorization process adds color to the printed text or adds color to the background.

(3) *Background pattern:* Denotes the background pattern when adding color to the background is selected as the colorization method. The background pattern may be set to halftone, diagonal slashes, or solid fill, for example.

(4) *Background tone:* Denotes the density of the background color when the colorization process adds a background color. In this embodiment the background tone is set to one of three levels, dark, medium, and light. The number of levels of the tone may be higher or lower than 3, as desired.

(5) *Image color:* Denotes the print color of image data such as the store logo printed on each receipt, and is set to either the first color or the second color.

These information items of the colorization information 38 can be set by the user from a dialog box or window presented on screen by a colorization information setup unit 40, for example.

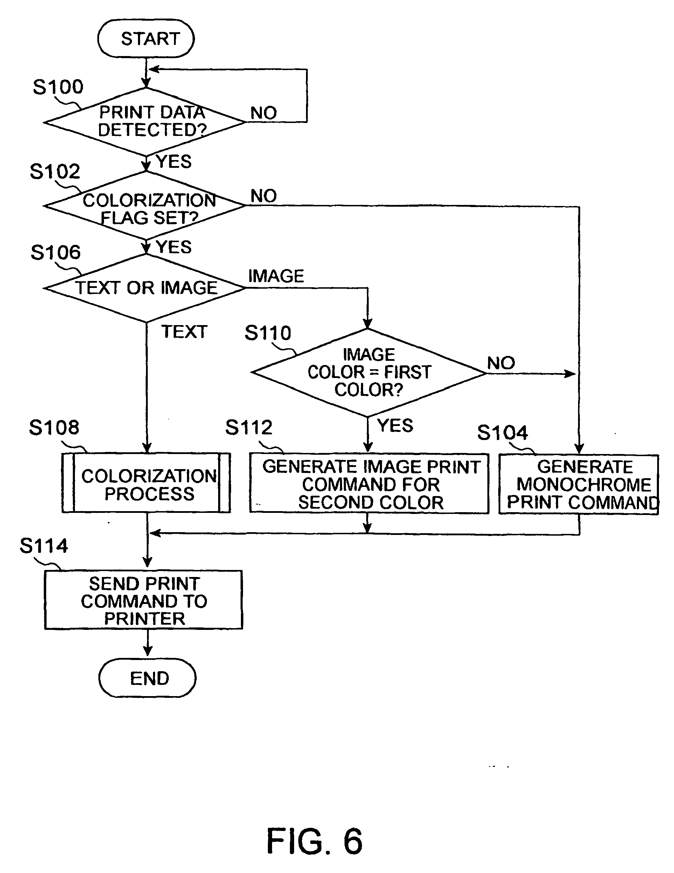

The data processing part 30 and command output part 32 are implemented by running a program embedded in the service object 22. Fig. 6 is a flow chart illustrating this program and is described below.

As shown in Fig. 6, when print data is passed from the POS application program 24 through the control object 20 (S100), it is determined whether or not the colorization flag 36 is set (S102). If the colorization flag 36 is not set, a normal command generation process for converting the print data to a print command for the printer 12 runs (S104). If the colorization flag 36 is set, the print data is interpreted to determine if it is text print data or print data for one of the stored images (5106). If it is text print data, a colorization process is run based on the colorization information 38 (S108).

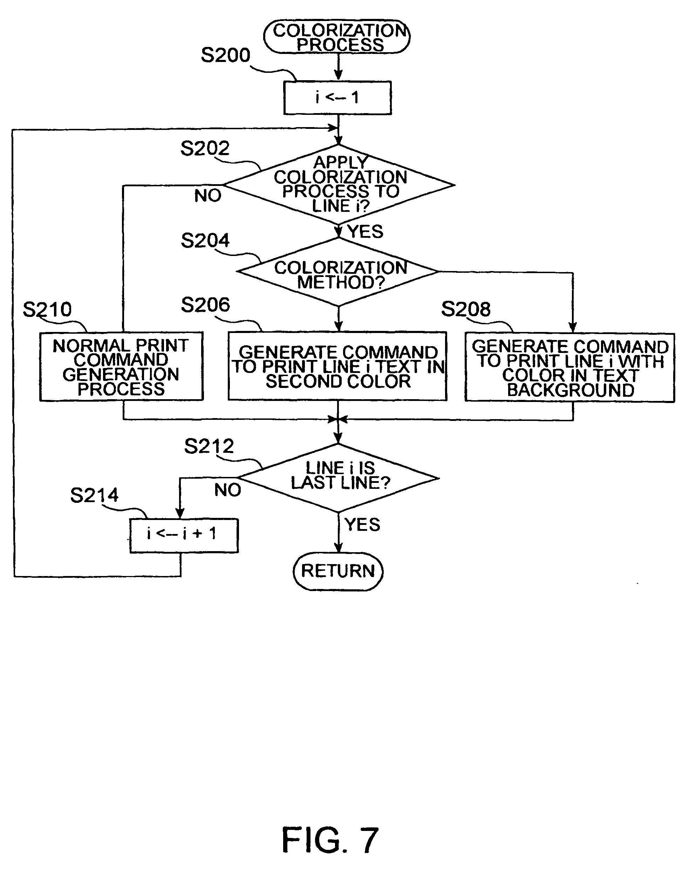

Fig. 7 is a flow chart showing the details of the colorization process run in step S108. The index i denoting the current line is first initialized to 1 (S200). Based on the line unit value in the colorization information 38, whether line i is to be subjected to the colorization process is determined (S202). If it is to be colorized, whether the colorization method is text color or background color is determined (S204). If the colorization method is text color, a text print command for printing the text in line i in the second color is generated (S206). If color is to be added to the background, however, a text print command is generated for printing line i with the background pattern specified in the colorization information the background pattern being printed in the second color (S208). On the other hand, if step S202 determines that the colorization process does not apply in line i, a normal command generation process is run to generate a text print command for printing the text in line i in the first color (S210).

Whether line i is the last line is then determined (S212). If it is not the last line, index i is incremented by 1 (S214) and control loops back to step S202. If line i is the last line, control returns to the process shown in Fig. 6.

Referring again to Fig. 6, if the print data is determined to be image print data in step S106, the image color is determined from the colorization information 38 (S110). If the image color is the first color, the normal command generation process runs in step S104. However, if the image color is the second color, an image print command is generated for printing the image data in the second color (S112).

The print command generated in step S104, S108, or S112 is then sent to the printer 12 (S114). As described above with reference to Fig. 2, the printer 12 runs a printing process according to the print commands received from the host 10, and an easy-to-read receipt with color added to every second block of lines, such as shown in Fig. 5, is issued, for instance.

It should be noted that the example in Fig. 5 shows a case in which the print color of the image part is specified separately from the text part. That is, the image part in Fig. 5, which might be a store logo, is printed using the color specified for the image, and the product name and price information in the text part is printed with color added to either the text or the text background as explained above. The result is a receipt that is easier to read.

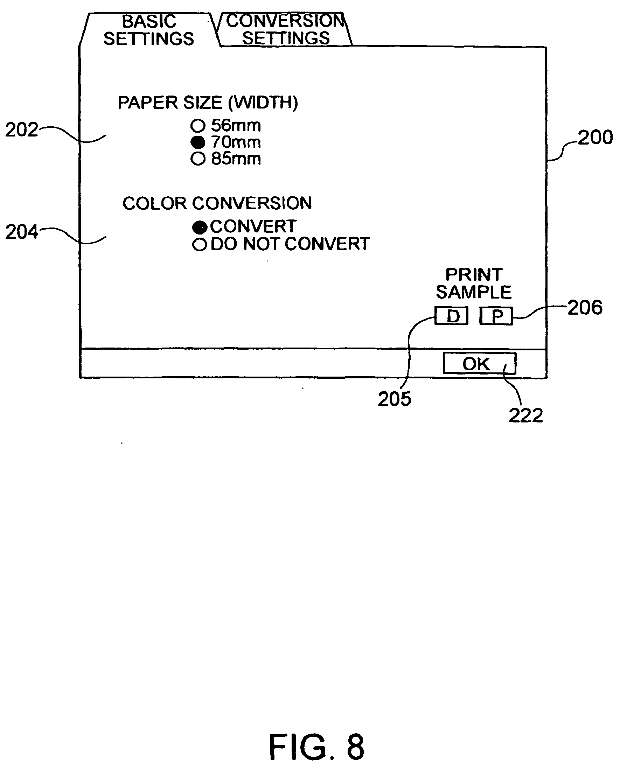

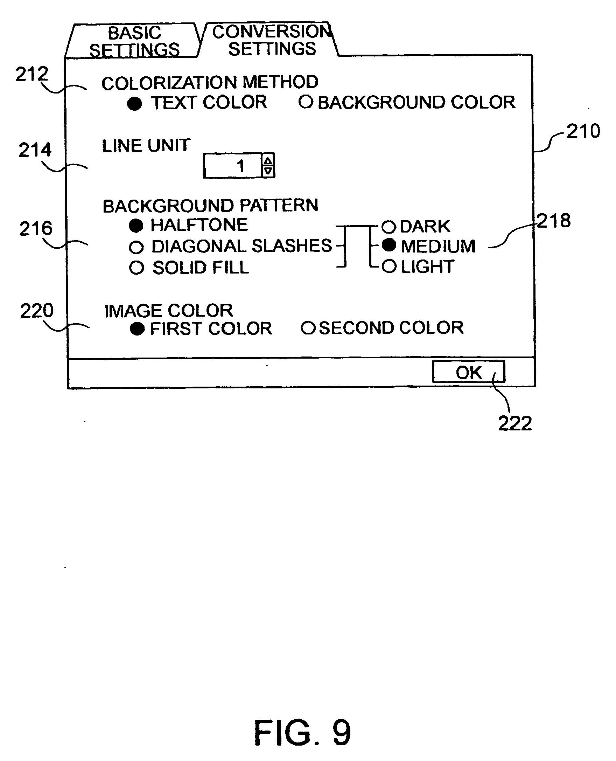

Setting the colorization information 38 by means of the colorization information setup unit 40 is described next. The colorization information setup unit 40 is implemented by the host 10 running a specific setup program. When this setup program runs, setup windows 200, 210 such as shown in Fig. 8 and Fig. 9 are presented on the display device 16. When the setup program starts, a basic setup window 200 such as shown in Fig. 8 is displayed. The user can switch between this basic setup window 200 and a conversion settings window 210 as shown in Fig. 9 by selecting the appropriate tab at the top of the window.

As shown in Fig. 8, the basic setup window 200 has a paper width setting 202 for selecting the paper width and a color conversion setting 204 for selecting whether to apply (enable) the colorization process.

As shown in Fig. 9, the conversion settings window 210 has one input field for each information item of the colorization information 38, that is, an input field 212 for setting text color or background color, an input field 214 for setting the line unit of the colorization process, an input field 216 for setting the background pattern, an input field 218 for setting the background tone, and an input field 220 for setting the image color. It should be noted that in the example shown in Fig. 9 the value entered into input field 214 specifies the number of lines as a numeric value that can be increased or decreased by clicking on the up and down arrows shown to the right of the input box. Values for the input fields other than input field 214 are defined by clicking the check box or radio button provided adjacent to each available choice. It should be noted that when the setup program starts up, the current colorization flag 36 and colorization information 38 stored in the colorization information storage unit 34 are read, and the read values are set as the values initially displayed in the corresponding input fields in the basic printing setup window 200 and the color conversion settings window 210.

The basic setup window 200 and conversion settings window 210 share a common OK button 222. Clicking the OK button 222 stores the setting in input field 204 as the colorization flag 36 and the settings in input fields 212 to 220 as the colorization information 38 in colorization information storage unit 34. The basic setup window 200 has a print sample section for visually checking the colorization settings by printing or displaying a sample receipt. A button 205 is for displaying a sample receipt produced according to the colorization information, and a button 206 is for printing a sample receipt such as shown in Fig. 5. The sample receipt is produced based on data preset in a memory as dummy-sales information.

Once the colorization information 38 is thus set and print data is subsequently output from the POS application program 24, the colorization process described above is applied according to this colorization information 38, and the print data is printed in two colors by the printer 12.

As described above this embodiment applies a colorization process according to the colorization information 38 to the monochrome print data output from the POS application program 24 to generate multichrome print data and send a color print command to the printer 12. By simply changing the printer driver, (more particularly, the service object 22), it is therefore possible to have a color printer 12 print in two or more colors even when the POS application program 24 is only compatible with a monochrome printer. This first embodiment therefore makes it possible to issue easy-to-read receipts printed in two or more colors without financially burdening the POS system user, that is, the store.

Furthermore, because the process of adding color to text data is applied to blocks of print lines with the number of lines per block being determined by the line unit value, the print lines in a block that has been colorized can be clearly differentiated from those in a block that has not, thereby making it easy to read the printed receipt. More specifically, the correlation between product name and price printed on the same line of the receipt is easier to understand, and it is easier to prevent the eyes from skipping a line when reading the price for a particular product.

This embodiment also makes it possible to separately specify how color is used for image data and text data. It is therefore possible to print the store logo, for example, using the color preferred by the store while still making it possible to issue an easy-to-read receipt printed in two or more colors.

Furthermore, because the colorization process is applied according to the colorization information 38 stored in the colorization information storage unit 34, printing in two or more colors according to user preferences is possible by appropriately setting the colorization information 38 using the colorization information setup unit 40.

Yet further, the colorization information 38 can be setup by simply selecting the desired available options and values from the setup windows 200 and 210 as shown in Fig. 8 and Fig. 9. More specifically, a system according to this embodiment provides an easy-to-use user interface for defining the colorization information 38, and a printing format using two or more colors can be easily set using simple setup dialogs 200 and 210.

It should also be noted that in a two-color inkjet printer exemplified by this printer 12 the frequency of printing with the second color is generally low and ink of the second color is therefore consumed more slowly than ink of the first color. Because ink of the second color may thus be left in the printer 12 without being accessed for a relatively long period, the ink viscosity could increase and the composition of the ink could degrade, thus leading to such problems as clogging of the print head or the print nozzles. This first embodiment addresses this problem by printing with the second color even when monochrome print data is output from the POS application program 24. The second color is therefore used with approximately the same frequency as the first color, and print head clogging and other such problems can thus be prevented.

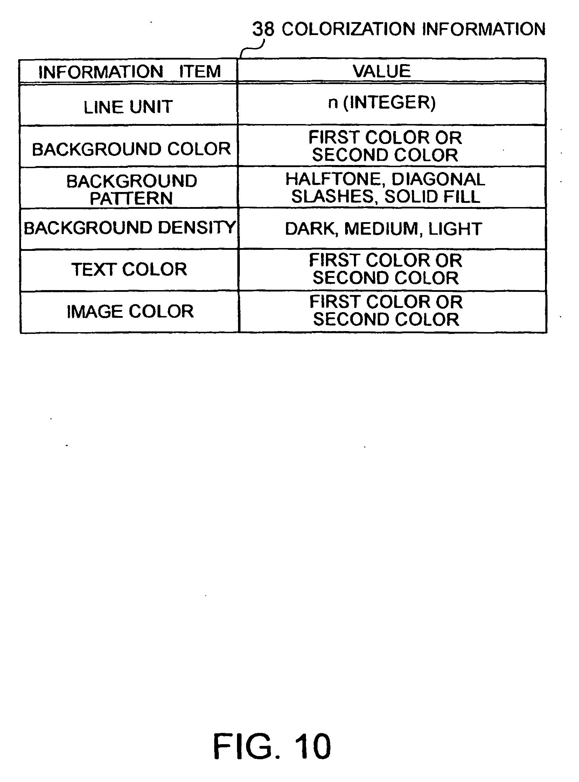

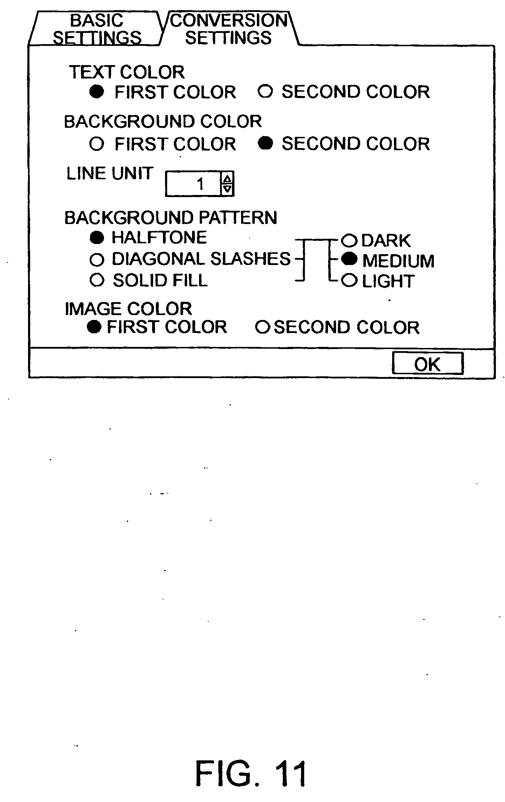

It should be further noted that color can be added to text data in this first embodiment by specifying either text color or background color for the text data, but the invention is not limited to this choice. It is also possible, for example, to separately specify both the text color and background color for text data. Fig. 10 and Fig. 11 illustrate a first modification of the first embodiment and respectively show examples of the colorization information 38 and color conversion settings window 210 that can be used to make these settings. It is thus possible to specify printing a background using the first color while printing the text in the second color, thus increasing the variations possible with two-color printing.

Furthermore, it has been described so far that text is colorized such that blocks of lines in one color and blocks of lines in another color alternate on the receipt, wherein both kinds of block have the same number of lines as specified by the line unit setting (it should be noted that the term "block" should not be construed to exclude a single line, i.e., the line unit value may be 1 or greater). It is also possible, however, to separately define the number of lines in those two kinds of block. In this case the number of lines of each block printed with one color and the number of lines of each block printed with another color may be different.

Furthermore, the printer 12 in this first embodiment is a printer capable of printing two colors. This invention can also be applied, however, to printers capable of printing three or more colors, including printers capable of printing mixed colors by simultaneously printing the first color and the second color, and printers with one print head capable of printing three or more colors.

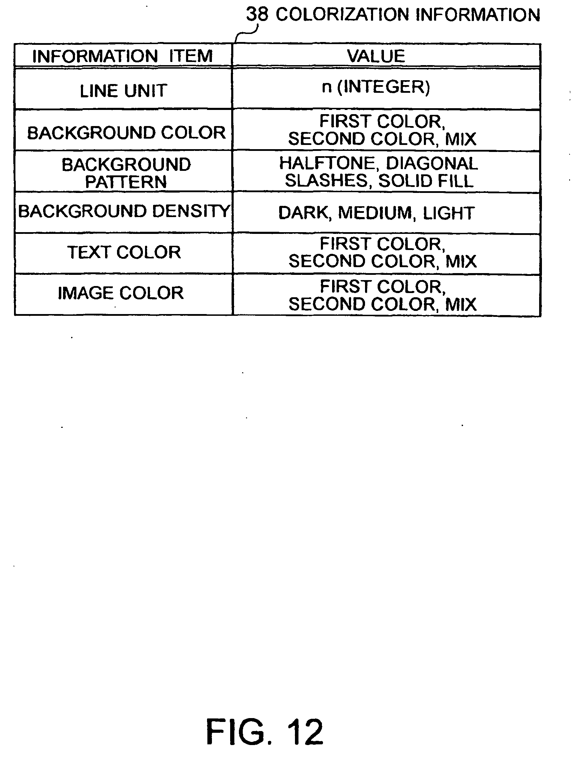

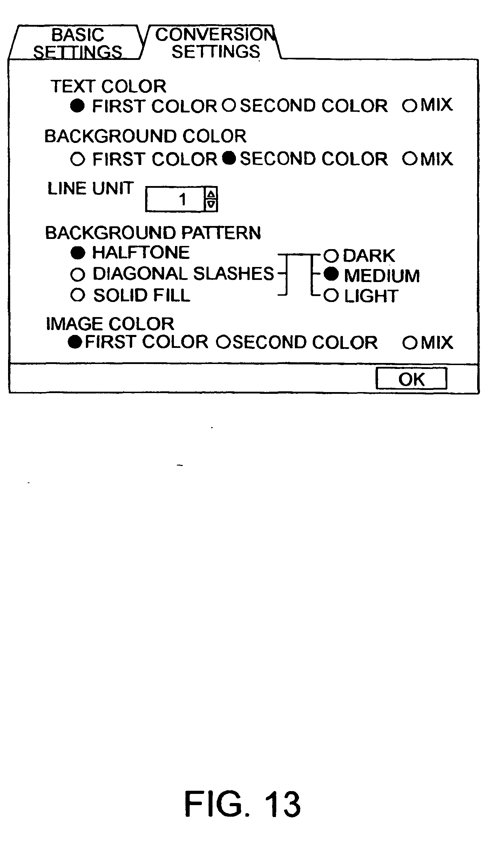

Fig. 12 and Fig. 13 illustrate a second modification of the first embodiment and show an example of the colorization information 38 and color conversion setup window suitable for a printer printing three colors: a first (main) color, a second color (subcolor), and a blend or mixture of the first and the second color. In the examples shown in Fig. 12 and Fig. 13 the print color for text, background, and images can be selected from these three choices, i.e., the first color, the second color, and the mixed color.

it will also be noted that while the first embodiment has been described with reference to printing receipts in a POS system, the invention can be more widely applied for any purpose printing in two or more colors based on monochrome print data using a printer capable of printing in two or more colors.

In the first embodiment as a preferred embodiment of this invention the details of the colorization process are defined separately for images and text data. Within the scope of this invention it is also possible, however, that only the text data or only the image data is subjected to any of the colorization processes explained above. Even in this case the print result will be a multichrome receipt or other document.

Yet further, the colorization information setup unit 40 in this first embodiment is described as part of the host 10 controlling the printer 12. Alternatively, the colorization information setup unit 40 could be provided as a colorization information setup device separate from the host 10. In this case the colorization information 38 specified using the colorization information setup unit 40 is sent to the host 10 or stored in memory shared with the host 10 so that the colorization information 38 can be referenced by the host 10.

Embodiment 2

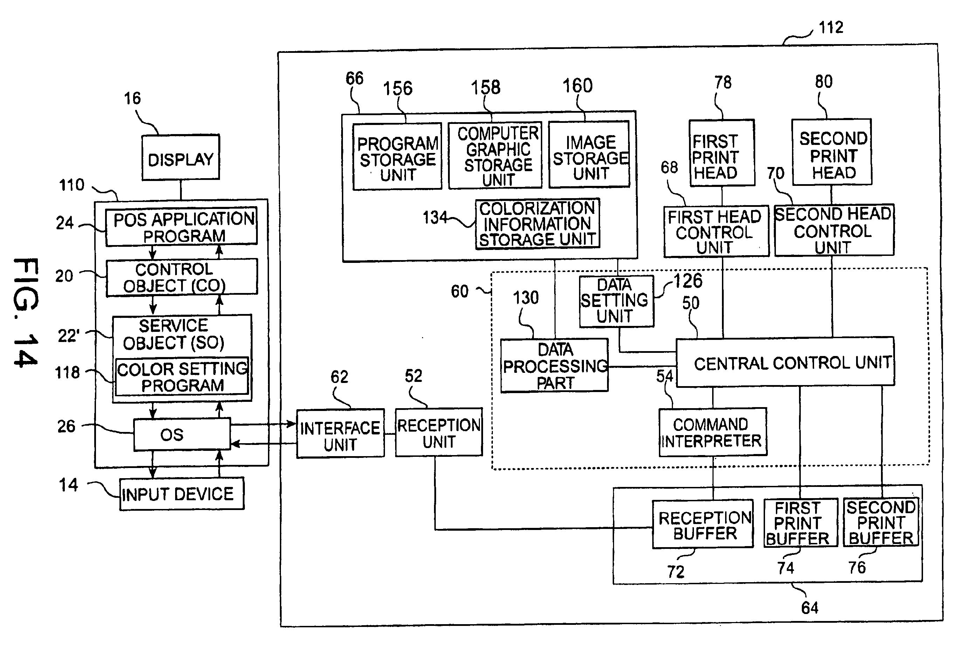

A second embodiment of the invention will be described below with reference to Figures 14 to 18, in which like reference numerals denote like elements. As will be explained in detail, a main difference between the first and the second embodiments resides in the fact that in the first embodiment the colorization process, if any, is performed in the host, whereas in the second embodiment it is performed in the printer.

Fig. 14 is a block diagram showing the overall configuration of a POS system according to the second embodiment. As shown in the figure the POS system according to this second embodiment has a host 110 and a printer 112.

The printer 112 is a printer capable of printing two colors, a first (main) color, such as black, and a second color (subcolor), such as red or blue. Printer 112 prints receipts according to print commands sent from the host 110. It should be noted that, like the printer 12 of the first embodiment, the printer 112 could also be a color printer capable of printing three or more colors. Printer 112 may be an inkjet printer, a thermal transfer printer or any other type of printer capable of printing in two or more colors.

The host 110 is typically a computer system that controls the printer 112 by means of a printer driver as explained for the first embodiment. The printer driver has a printer control object 20 for the device category "printer" and a service object 22' for each printer model. The service object 22' differs from the service object 22 of the first embodiment as will be appreciated from the following description.

The POS application program 24 tabulates sales data for the purchased products based on corresponding product codes input via the input device 14, and outputs print data for printing the tabulated data as a receipt. Monochrome print data output from the POS application program 24 is passed to the printer control object 20, and is passed from the control object 20 to the service object 22' corresponding to the particular printer model. The service object 22' processes the print data for the printer to generate a print command according to the command specifications of the printer 112, and then sends the print command to the printer 112 through the OS 26. The service object 22' thus absorbs differences between different printer models, and enables the POS application program 24 to be written as a program that is not dependent on a particular printer model.

A colorization setup program 118 for setting the colorization information stored in the printer 112 as described below is embedded in the service object 22'. The colorization setup program 118 provides a user interface allowing the user to set the colorization information by displaying specific windows and dialogs on the display device 16.

Print commands sent from host 110 to the printer 112 include commands for printing text (called "text print commands") and commands for printing images (called "image print commands"). The printer 112 can print both text and images in response to the text print commands and image print commands applied thereto. In this second embodiment the print commands output by the host 110 are monochrome print commands. The printer 112 has a function for applying a colorization process to the monochrome print commands in order to convert the monochrome data to multichrome data and to print with at least two colors. This function is called "colorization" below.

Commands related to image printing include ESC *, ESC L, and GS/. Command GS/, for example, tells the printer 112 to print an image previously stored in the printer 112. This second embodiment prints images such as a store logo pre-registered in the printer 112 on a receipt by using command GS/. Because the image print command uses a specific command code, the printer 112 can easily distinguish image print commands from text print commands.

The printer 112 shown in Fig. 14 has a CPU 60, an interface unit 62 and a reception unit 52. The CPU 60 has a central control unit 50, a command interpreter 54, a data processing part 130, and a data setting unit 126. The command interpreter 54, interface unit 62 and reception unit 52 are basically the same as those in the first embodiment. The command interpreter 54 interprets commands and data received from the host 110 via the reception unit 52 through the interface unit 62, and the central control unit 50 runs a process according to the interpreted command. The central control unit 50, command interpreter 54, data processing part 130, and data setting unit 126 are functional units that can be implemented by the CPU 60 running a particular control program.

Connected to the CPU 60 are RAM 64, ROM 66, first head controller 68, and second head controller 70 as in the first embodiment.

Provided in RAM 61 are a receive buffer 72, a first print buffer 74, and a second print buffer 76. Commands and data received from the host 110 by the reception unit 52 are stored in the receive buffer 72. First color print data is stored in a bit data format in the first print buffer 74, and second color print data is similarly stored in the second print buffer 76.

Provided in the ROM 66 are a program storage unit 156 for storing the control program run by the CPU 60, a computer graphic storage unit 158 for storing bit patterns for each character and bit patterns for the background to be added to text, an image storage unit 160 for storing logos and other image data to be printed on the receipts, and a colorization information storage unit 134 for storing colorization information as further described below.

It should be noted that ROM 66 is composed of a rewritable ROM part, such as EEPROM, and a mask ROM or non-writable ROM part storing firmware; the program storage unit 156 is disposed in the non-writable ROM part, and the computer graphic storage unit 158, image storage unit 160, and colorization information storage unit 134 are disposed in the rewritable ROM part. The computer graphic storage unit 158 could alternatively be disposed in the non-writable ROM part.

A first print head 78 is connected to first head controller 68, and a second print head 80 is connected to second head controller 70. The first print head 78 and the second print head 80 are print heads for printing the first and the second colors, respectively; they print the print data stored in first print buffer 74 and second print buffer 76 in the first and the second color as controlled by the first head controller 68 and the second head controller 70, respectively.

The command interpreter 54 interprets commands stored in the receive buffer 72 and determines if the print command is a text print command or an image print command. The result is passed with the print data specified by the print command to the data processing part 130. Based on the received data the data processing part 130 stores the print data in a bit data format in the first print buffer 74 and second print buffer 76 as further described below.

If the colorization function noted above is not enabled (that is, if the colorization flag stored in the colorization information storage unit 134 described below is not set), the data processing part 130 reads the bit pattern data for each character of the print data in the text print command from the computer graphic storage unit 158, and stores the bit data in the first print buffer 74. For image print commands the bit image data for the image to be printed is read from the image storage unit 160 and stored in the first print buffer 74. The first print head 78 is then driven to print data stored in the first print buffer 74 in one color, i.e., the first color.

If the colorization function is enabled, the data is printed in two colors by running a specific colorization process according to the colorization information stored in the colorization information storage unit 134. Details of this colorization process are described further below.

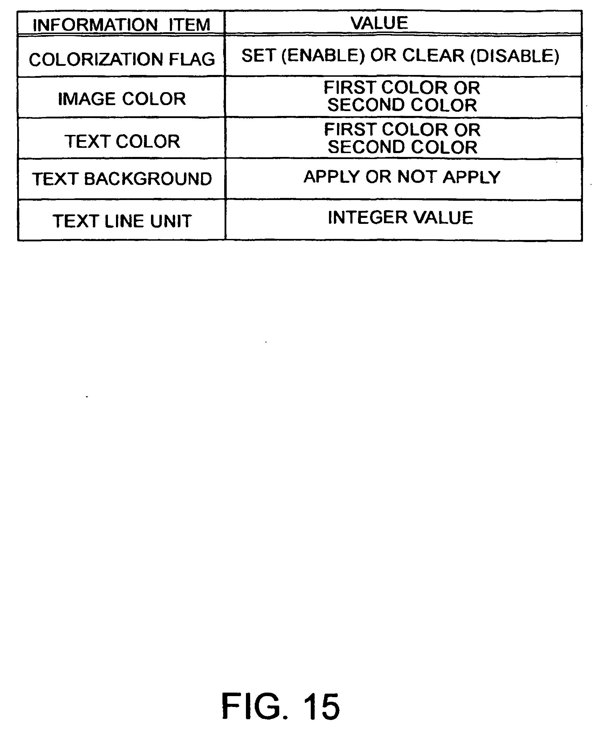

Fig. 15 shows an example of the colorization information. As shown in the figure the colorization information includes various information items, namely colorization flag, image color, text color, text background flag, and text line unit. These information items are described below.

(1) *Colorization* flag:       indicates whether the colorization function is enabled or disabled. If the flag is set the colorization function is enabled.

| (2) Image color: | specifies whether to use the first or the second color for printing images. |
| --- | --- |
| (3) Text color | specifies whether to use the first or the second the color for printing text. |
| (4) Text background flag: | specifies whether to add a background color to text. |
| (5) Text line unit: | the number of lines of text data to which the colorization process is to be applied as one block. For example, if the line unit value is 2, two lines to which the colorization process is applied and two lines to which the process is not applied alternate as in the first embodiment shown in Fig. 5. |

The information items of the colorization information can be set by a specific color setup command sent from the host 110 to the printer 112. This color setup command comprises a command code and parameters such as shown below.

## ESC X *n1, n2, n3, n4, n5*

where parameters *n1* to *n5* correspond to the above information items (1) to (5) of the colorization information and are defined as follows:

*n1*:   indicates whether the colorization function is enabled (enable = 1; disable = 0)
*n2*:   indicates whether to print images with the second color (second color = 1; first color = 0)
*n3*:   indicates whether to print text with the second color (second color = 1; first color = 0)
n4:   indicates whether to print text background with the second color (print = 1; do not print = 0)
*n5*:   a number specifying the line unit value.

It should be noted that it is not necessary that there is one parameter for each information item of the colorization information; instead one parameter could correspond to multiple information items. For example, because parameters *n1* to *n4* can be expressed by a 4-bit value, a single parameter representing these four bits and a single parameter denoting the line unit value could be used so that all five information items (1) to (5) above are expressed with two parameters. Various formats can be used to specify the above five information items (1) to (5) as parameters of the color setup command.
When the printer 112 receives this color setup command it sets the colorization information by means of the data setting unit 126 correspondingly.
It should be noted that the command code ESC X is defined by the printer manufacturer and can be interpreted by a matching printer. Any code that can be distinguished from other commands and interpreted by a matching printer can therefore be used as the above-noted command code ESC X.

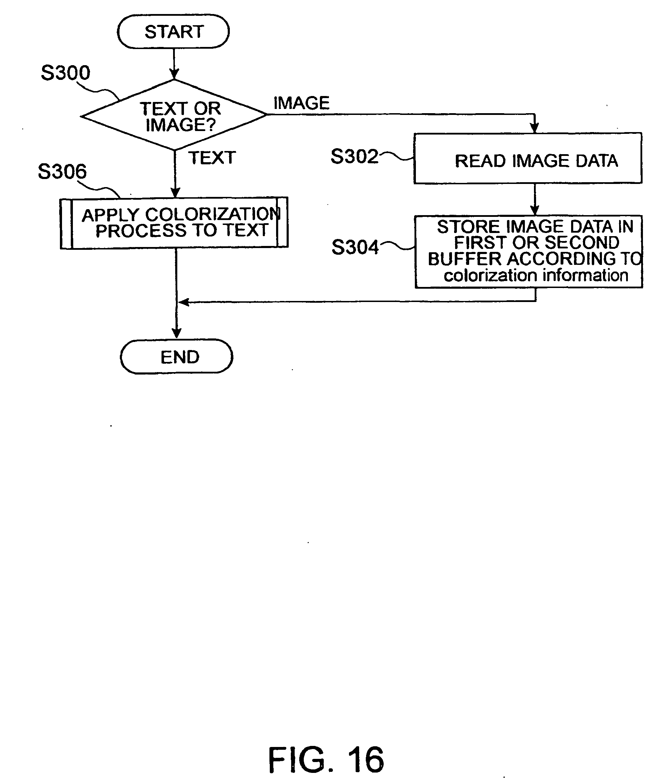

Fig. 16 is a flow chart of the process run by the data processing part 130 when the colorization function is enabled (that is, when the colorization flag is set). As shown in Fig. 16, whether the print command is a text print command or an image print command is determined first (S300). If it is an image print command, the bit image data for the image specified in the print command is read from the image storage unit 160 (S302) and stored in the first print buffer 74 or the second print buffer 76 according to the value of the image color in the colorization information (S304). More specifically, if image color is set to the first color, the image data is stored in the first print buffer 74, which is assigned to the first color, but if image color is set to the second color, the image data is stored in the second print buffer 76, which is used for the second color.
On the other hand, if the print command is a text print command, the colorization process is applied to the text data specified for printing by the print command based on the colorization information (S306).

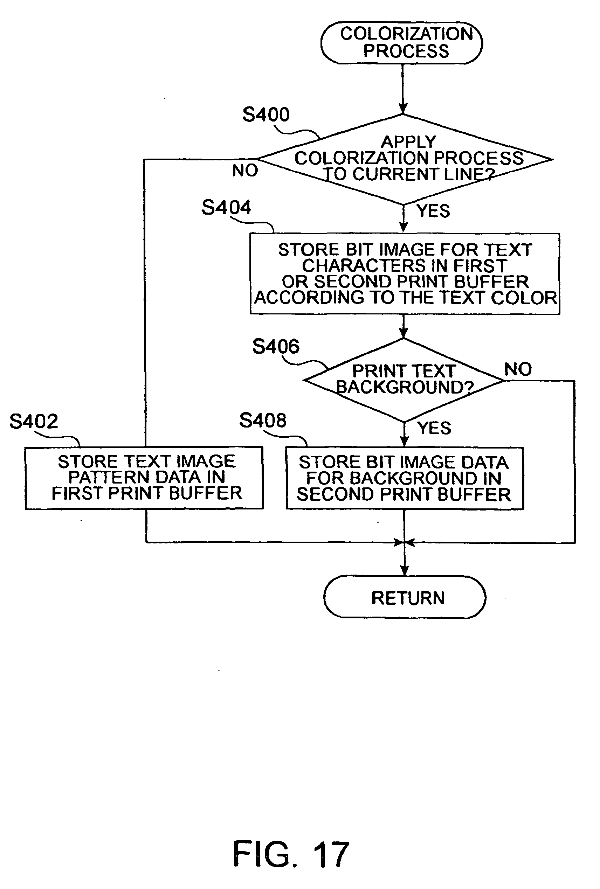

Fig. 17 is a flow chart of the colorization process applied to the text data in step S306 in Fig. 16.
As shown in Fig. 17 the first step is to determine whether the colorization process is to be applied, i.e., whether color is to be added to the current line based on the line unit value in the colorization information 38 (S400). It should be noted that by counting the carriage return codes in the text print data, the data processing part 130 can count the text lines and determine whether the current line is to be processed by the colorization process based on the current line number and the line unit value. If the data processing part 130 determines that the current line is not be processed by the colorization process, the image pattern data for the text characters is read from the computer graphic storage unit 158 and stored in the first print buffer 74 (S402), and the current iteration of the colorization process ends.

However, if the colorization process is to be applied to the current line, the image pattern data for the text characters is read from the computer graphic storage unit 158 and stored in the first print buffer 74 or the second print buffer 76 according to the text color setting in the colorization information (S404). More specifically, if the color for printing text is the first color, the bit images for the printed characters is stored in the first print buffer 74, but if it is the second color, the bit image data is stored in the second print buffer 76.

Whether the text background flag in the colorization information is set is then determined (S406). If the text background flag is not set (no background is to be printed), the current iteration of the colorization process ends. If the text background flag is set, however, the bit pattern data for the background pattern is read from the image storage unit 160 and stored in the second print buffer 76 (S408), and the colorization process then ends.

The data processing part 130 thus stores print data in the first print buffer 74 or the second print buffer 76 according to the colorization information for both text and image print commands. As described above, data is thus printed in the first color and the second color according to the print data stored in the first print buffer 74 and the second print buffer 76, respectively. The above-described process applied by the data processing part 130 therefore enables printing a two-color receipt such as shown in the example in Fig. 5 according to the contents of the colorization information based on a monochrome print command.

It should be noted that the print data stored in the first print buffer 74 and the second print buffer 76 in steps S304, S402, and S408 above in this second embodiment represent the multichrome print data in the accompanying claims of this invention.

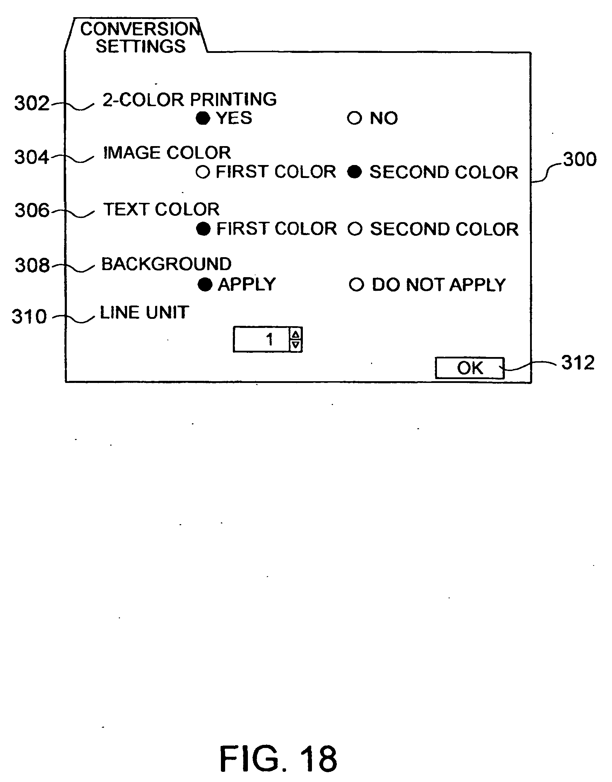

Setting the colorization information in the host 110 in this embodiment is described next. The colorization information can be set by running the colorization setup program 118 on the host 110. When the colorization setup program 118 is started up a settings window 300 such as shown in Fig. 18 is presented on the display device 16 of the host 110.

As shown in Fig. 18 this settings window 300 has an input field 302 for selecting two-color printing (i.e., turning the colorization function on or off), an input field 304 for setting the image color, an input field 306 for setting the text color, an input field 308 for selecting whether to print a text background, an input field 310 for setting the number of lines in each line unit, and an OK button 312. When the colorization setup program 118 starts up a command is sent to the printer 112 to read the colorization information, and the contents of the colorization information returned in response to this command is initially displayed in the corresponding input fields in the settings window 300.

When the OK button 312 in the settings window 300 is clicked a color settings command is generated and sent to the printer 112 based on the content of each input field.

For example, if two-color printing is on, the image color is set to the second color, the text color is set to the first color, the text background is on, and the line unit count is 2, the color settings command ESC X 11012 is sent to the printer 112. The data setting unit 126 of the printer 112 then sets the colorization information based on this color settings command.

When a monochrome print command is sent from the host 110 to the printer 112 in this second embodiment the colorization function of the printer 112 applies a colorization process according to the colorization information stored in the printer to add a second color and print in two colors. As a result, even if the POS application program 24 run by the host 110 is only compatible with a monochrome printer, a color printer 112 can be used to print in two or more colors without making any changes to the program on the host side. It is therefore possible with this second embodiment to issue easy-to-read receipts printed in two or more colors without financially burdening the POS system user, i.e., the store. More specifically, this color printer 112 can be installed in a store without changing the existing POS system program, the work and cost involved in updating the POS system can be reduced, and the utilization value can be improved for the store. In the second embodiment as explained so far, the colorization setup program 118 is part of the printer driver. In this case it would thus be necessary to change the printer driver on the host side to enable multichrome printing based on monochrome print data. As in the first embodiment, it is possible, however, to provide such colorization setup program as a separate colorization information setup unit, e.g., embodied on a data carrier, such as a CD, and distributed together with printer 112. By executing such separate program on the host 110, the colorization information could be entered and confirmed in the same way as explained above and multichrome printing based on monochrome print data could be achieved even without requiring the printer driver to be changed compared to that used for monochrome printing.

This second embodiment can also distinguish between image print commands and text print commands, and can define the details of the colorization process separately for text and images. A store logo, for example, can therefore be printed in the color preferred by the store while it is still possible to issue easy-to-read receipts in two or more colors. Therefore, if the store has a specific corporate color that color can be used to print a store logo, for example, and impress upon the customer a positive association between that color and the store.

Furthermore, because the colorization information stored in the printer 112 is set according to a color settings command sent from the host 110, the details of the colorization process can be defined on the side of host 110 by the user without directly operating the printer 112. In addition, because the colorization information can be set by simply activating the colorization setup program 118 and entering the desired values and settings from a settings window 300 such as shown in Fig. 18, an easy-to-use interface can be provided for the user.

Yet further, because the content of the current colorization information, i.e., the settings of the individual information items, is presented automatically in the settings window 300 when the colorization setup program 118 is activated, the user can readily know what the current settings are.

As noted above, this second embodiment makes it possible to add a second color for two-color printing according to a monochrome print command sent from the host 110. This second embodiment can therefore also prevent the problems that arise when the second color is consumed more slowly than the first color because the second color of ink is used at approximately the same frequency as the first color of ink.

It will also be obvious that while the colorization information in this second embodiment is described as comprising certain information items for specifying the details of the colorization process, such as the image color, text color, text background on/off flag, and line unit value for text to be colored, these information items represent examples only. For example, instead of applying the colorization process to every second block of a certain text line number as in the first and second embodiments, a single print color could be specified for all text. Furthermore, a number of patterns, such as a halftone, diagonal slashes, and solid fill, can also be stored in the printer 112 so that a desired pattern can be selected. Furthermore, the first and the second embodiments have been described as allowing selection of the print color for image data which means the image data remain monochrome data even though the print-out (e.g. the receipt or other document) becomes multichrome because either text and image are printed in different colors or the text data have been converted to multichrome data. While converting monochrome text data to multichrome text data in the manner described above may be easier, it should be noted that it is also possible to convert monochrome image data to multichrome image data. One possibility is printing the stored image (e.g. a store logo) in one selected color and superimposing a selected pattern in one or more other colors. Another possibility is to separate the stored image data into two or more portions based on a predetermined algorithm and printing each portion in a different color. The algorithm could, for instance, separate the stored image data into image portions of low density and image portions of high density to apply different colors to these portions.

Like printer 12 of the first embodiment, printer 112 of the second embodiment may be one capable of printing more than two colors. The corresponding explanation given above with respect to the first embodiment, including the description of Figures 12 and 13, applies to the second embodiment mutatis mutandis.

Various printing features can thus be used as the colorization information. What is important is that the present invention makes it possible to use the colorization information to specify how monochrome print data is to be printed in two or more colors, and the color settings command has a format able to specify the content of each print feature corresponding to the features (items) defined in the colorization information.

It should also be noted that this second embodiment is described as being applied to printing receipts in a POS system. The invention is applicable beyond POS systems, however, to all cases in which two or more colors may be printed based on a monochrome print command by means of a printer capable of printing in two or more colors.

It should further be noted that the first and the second embodiments may be combined in that the kind of colorization and the corresponding colorization information as described in the context of the first embodiment may be used in the second embodiment and vice versa.

**Claims**

1. A printing system comprising:

    printing means (78, 80) capable of printing in two or more colors;
    print data fetching means (20; 52, 62) for fetching monochrome print data;
    data interpreting and evaluating means (50, 54) for interpreting the fetched print data and determining if the print data is text data or image data;
    storage means (34,134) for storing colorization information defining a colorization process to be applied to the text data and/or the image data;
    print data processing means (30; 130) responsive to said data interpreting and evaluating means (50, 54) and said colorization information for applying said colorization process to the monochrome print data and for producing multichrome print data for application to said printing means (78, 80).

2. The system of claim 1, wherein said colorization information defines a colorization process to be applied to blocks of printing lines of text data contained in the monochrome print data.

**3.** The system of claim 1 or 2, wherein said colorization information includes one or more of the following information items:

- background color specifying whether said colorization process is to add a background color to said text data,
- text color specifying a change in font color of said text data, and
- image color defining a specific colorization process to be applied to image data.

**4.** The system of claim 3, wherein said specific colorization process to be applied to image data is a process for converting a monochrome image to a multichrome image.

**5.** The system of any one of the preceding claims, further comprising:

an input device (14) accepting input by the user of the system;
a display device (16); and
setting means (40; 118) enabling a user to set the colorization information using said input device (14) while displaying the currently set colorization information on said display device (16).

**6.** The system of claim 5, wherein the setting means (40; 118) comprises:

display control means for presenting a data entry screen containing input fields (212-220; 302-310) for entering the colorization information for each of predetermined information items; and
input control means for setting the colorization information in accordance with the data entered into said input fields (212-220; 302-310).

**7.** The system of claim 6, wherein said data input fields (212-220; 302-310) include text-related input fields (212-218) for entering data defining the colorization process of text data.

**8.** The system of claim 6, wherein the text-related input fields include one or more of

- an input field relating to the text font color, and
- an input field relating to the text background color.

**9.** The system of claim 6, 7 or 8, wherein said data input fields (212-220; 302-310) include an image-related input field (220; 304) for entering data determining the color for printing image data.

**10.** The printing system of any one of claims 1 to 9 comprising:

a printer (12) including said printing means (78, 80); and
a printer driver for controlling the printer (12), the printer driver including
said storage means (34), said print data processing means (30) and transmission means (32) for sending the multichrome print data to the printer (12).

**11.** The printing system of any one of claims 1 to 9, wherein said print data fetching means include reception means (52) for receiving commands and print data from a host.

**12.** Use of the printing system as defined in any one of claims 1 to 11 in a POS (Point Of Sale) system, comprising a POS application execution unit for tabulating sales information based on information of purchased products input via an input device (14) and for outputting said monochrome print data for printing a receipt.

**13.** A method of printing in two or more colors in response to monochrome print data, comprising:

(a) fetching monochrome print data;
(b) interpreting the fetched print data and determining if the print data is text data or image data;
(c) storing colorization information defining a colorization process to be applied to the text data and/or the image data;
(d) applying said colorization process to the monochrome print data and producing multichrome print data in responsive to step (b) and said colorization information; and
(e) controlling printing means capable of printing in two or more colors in accordance with the multichrome print data obtained in step (d).

14. The method of claim 13 further comprising:

(f) presenting a data entry screen containing input fields (212-220; 302-310) for entering the colorization information for each of predetermined information items;
(g) setting the colorization information based on the content input into each input field;
(h) producing a sample receipt based on the set colorization information, and
(i) displaying or printing the sample receipt.

15. A program of instructions which when it is run on a printing system causes the method as defined in claim 13 or 14 to be carried out.

16. A machine-readable storage medium carrying the program of claim 15.

**Patentansprüche**

1. Drucksystem, aufweisend:

Druckmittel (78, 80), die in zwei oder mehr Farben drucken können;
Druckdaten-Abrufmittel (20; 52, 62) zum Abrufen monochromer Druckdaten;
Dateninterpretierungs- und -auswertungsmittel (50, 54) zum Interpretieren der abgerufenen Druckdaten und zum Bestimmen, ob es sich bei den Druckdaten um Textdaten oder Bilddaten handelt;
Speichermittel (34; 134) zum Speichern von Kolorierungsinformationen, die einen auf die Textdaten und/oder die Bilddaten anzuwendenden Kolorierungsprozess definieren;
Druckdatenverarbeitungsmittel (30; 130), die auf die Dateninterpretierungs- und -auswertungsmittel (50, 54) und die Kolorierungsinformationen ansprechen, um den Kolorierungsprozess auf die monochromen Druckdaten anzuwenden und um multichrome Druckdaten zum Liefern an die Druckmittel (78, 80) zu erzeugen.

2. System nach Anspruch 1, bei dem die Kolorierungsinformationen einen Kolorierungsprozess definieren, der auf Blöcke aus Druckzeilen von Textdaten anzuwenden ist, die in den monochromen Druckdaten enthalten sind.

3. System nach Anspruch 1 oder 2, bei dem die Kolorierungsinformationen eines oder mehrere der folgenden Informationselemente enthalten:

- Hintergrundfarbe zur Vorgabe, ob der Kolorierungsprozess eine Hintergrundfarbe zu den Textdaten hinzufügen soll,
- Textfarbe zur Vorgabe einer Änderung der Schriftartfarbe der Textdaten, und
- Bildfarbe zur Definition eines auf Bilddaten anzuwendenden bestimmten Kolorierungsprozesses.

4. System nach Anspruch 3, bei dem der auf Bilddaten anzuwendende bestimmte Kolorierungsprozess ein Prozess zum Wandeln eines einfarbigen Bildes in ein mehrfarbiges Bild ist.

5. System nach einem der vorigen Ansprüche, ferner aufweisend:

ein Eingabegeräte (14), das Eingaben durch einen Benutzer des Systems annimmt;
ein Anzeigegerät (16); und

Einstellungsmittel (40; 118), die es einem Benutzer ermöglichen, die Kolorierungsinformationen unter Verwendung des Eingabegeräts (14) einzustellen, während die aktuell eingestellten Kolorierungsinformationen am Anzeigegerät (16) angezeigt werden.

6. System nach Anspruch 5, bei die Einstellungsmittel (40; 118) aufweisen:

Anzeigesteuerungsmittel zum Präsentieren eines Dateneingabe-Bildschirms mit Eingabefeldern (212 bis 220; 302 bis 310) zum Eingeben der Kolorierungsinformationen für jedes von vorgegebenen Informationselementen; und

Eingabesteuerungsmittel zum Einstellen der Kolorierungsinformationen gemäß den in die Eingabefelder (212 bis 220; 302 bis 310) eingegebenen Daten.

7. System nach Anspruch 6, bei dem die Dateneingabefelder (212 bis 220; 302 bis 310) textbezogene Eingabefelder (212 bis 218) zum Eingeben von Daten, die den Kolorierungsprozess der Textdaten definieren, enthalten.

8. System nach Anspruch 6, bei dem die textbezogenen Eingabefelder eines oder mehrere von

- einem Eingabefeld bezüglich der Textschriftartfarbe, und
- einem Eingabefeld bezüglich der Texthintergrundfarbe

enthalten.

9. System nach Anspruch 6, 7 oder 8, bei dem die Dateneingabefelder (212 bis 220; 302 bis 310) ein bildbezogenes Eingabefeld (220; 304) zum Eingeben von Daten, die die Farbe von Druckbilddaten bestimmen, enthalten.

10. Drucksystem nach einem der Ansprüche 1 bis 9, aufweisend:

einen Drucker (12), der die Druckmittel (78, 80) enthält; und
einen Druckertreiber zum Steuern des Druckers (12), wobei der Druckertreiber die Speichermittel (34), die Druckdatenverarbeitungsmittel (30) und Übertragungsmittel (32) zum Senden der muttichromen Druckdaten an den Drucker (12) enthält.

11. Drucksystem nach einem der Ansprüche 1 bis 9, bei dem die Druckdaten-Abrufmittel Empfangsmittel (52) zum Empfangen von Befehlen und Druckdaten von einem Host enthalten.

12. Verwendung des Drucksystems nach einem der Ansprüche 1 bis 11 in einem POS-(Point of Sale [Verkaufststellen]) System, das eine POS-Anwendungsausführungseinheit zum Tabellieren von Verkaufsinformationen auf der Basis von Informationen über erworbene Produkte, die über ein Eingabegerät (14) eingegeben werden, und zur Ausgabe der monochromen Druckdaten zum Drucken einer Quittung aufweist.

13. Verfahren zum Drucken in zwei oder mehr Farben als Reaktion auf monochrome Druckdaten, aufweisend:

(a) Abrufen monochromer Druckdaten;
(b) Interpretieren der abgerufenen Druckdaten und Bestimmen, ob die Druckdaten Textdaten oder Bilddaten sind;
(c) Speichern von Kolorierungsinformationen, die einen Kolorierungsprozess definieren, der auf die Textdaten und/oder die Bilddaten anzuwenden ist;
(d) Anwenden des Kolorierungsprozesses auf die monochromen Druckdaten und Erzeugen muttichromer Druckdaten als Reaktion auf Schritt (b) und die Kolorierungsinformationen; und
(e) Steuern von Druckmitteln, die in zwei oder mehr Farben drucken können, gemäß den in Schritt (d) erhaltenen multichromen Druckdaten.

14. Verfahren nach Anspruch 13, ferner aufweisend:

(f) Präsentieren eines Dateneingabe-Bildschirms mit Eingabefeldern (212 bis 220; 302 bis 310) zum Eingeben der Kolorierungsinformationen für jedes von vorgegebenen Informationselementen;
(g) Einstellen der Kolorierungsinformationen auf der Basis des in jedes Eingabefeld eingegebenen Inhalts;
(h) Erzeugen einer Musterquittung auf der Basis der eingestellten Kolorierungsinformationen;und
(i) Anzeigen oder Drucken der Musterquittung.

15. Programm mit Anweisungen, das , wenn es auf einem Drucksystem abläuft, veranlasst, dass das gemäß Anspruch 13 oder 14 definierte Verfahren ausgeführt wird.

16. Maschinenlesbares Speichermedium, das das Programm gemäß Anspruch 15 enthält.

**Revendications**

1. Système d'impression comprenant :

   des moyens (78, 80) d'impression pouvant imprimer en deux couleurs ou davantage ;
   des moyens (20 ; 52, 62) d'extraction de données à imprimer, destinés à extraire des données d'impression monochrome ;
   des moyens (50, 54) d'interprétation et d'évaluation de données, destinés à interpréter les données à imprimer extraites et à déterminer si les données à imprimer sont des données texte ou des données images ;
   des moyens (34, 134) de mémorisation, destinés à mémoriser des informations de colorisation définissant un traitement de colorisation à appliquer aux données texte et/ou aux données image ;
   des moyens (30 ; 130) de traitement de données à imprimer, répondant aux moyens (50, 54) d'interprétation et d'évaluation de données et aux informations de colorisation, en appliquant le traitement de colorisation aux données d'impression monochrome et en produisant des données d'impression polychrome à appliquer aux moyens (78, 80) d'impression.

2. Système suivant la revendication 1, dans lequel les informations de colorisation définissent un traitement de colorisation à appliquer à des blocs de lignes à imprimer de données texte, contenus dans les données d'impression monochrome.

3. Système suivant la revendication 1 ou 2, dans lequel les informations de colorisation contiennent un ou plusieurs des éléments d'information suivants :

   couleur d'arrière-plan spécifiant si le traitement de colorisation doit ajouter une couleur d'arrière-plan aux données texte,
   couleur de texte spécifiant un changement de couleur de police de caractères des données texte, et
   couleur d'image spécifiant un traitement de colorisation spécifique à appliquer à des données image.

4. Système suivant la revendication 3, dans lequel le procédé de colorisation spécifique à appliquer à des données image est un traitement pour convertir une image monochrome en une image polychrome.

5. Système suivant l'une quelconque des revendications précédentes, comprenant en outre :

   un dispositif (14) d'entrée acceptant des entrées de l'utilisateur du système ;
   un dispositif (16) d'affichage ; et
   des moyens (40 ; 118) de réglage permettant à un utilisateur de régler les informations de colorisation, à l'aide du dispositif (14) d'entrée, tout en affichant les informations de colorisation actuellement réglées, sur le dispositif (16) d'affichage.

6. Système suivant la revendication 5, dans lequel les moyens (40 ; 118) de réglage comprennent :

   un moyen de commande d'affichage pour présenter une page de saisie de données contenant des zones (212 à 220 ; 302 à 310) de saisie pour saisir les informations de colorisation pour chacun des éléments d'information déterminés à l'avance ; et
   un moyen de commande d'entrée, destiné à régler les informations de colorisation, conformément aux données saisies dans les zones (212 à 220 ; 302 à 310) de saisie.

7. Système suivant la revendication 6, dans lequel les zones (212 à 220 ; 302 à 310) de saisie de données comprennent des zones (212 à 218) de saisie relatives à du texte, pour saisir des données définissant le traitement de colorisation de données texte.

8. Système suivant la revendication 6, dans lequel les zones de saisie relatives à du texte comprennent une ou plusieurs :

   zone(s) de saisie relative(s) à la couleur de police de caractères du texte ; et
   zone(s) de saisie relative(s) à la couleur d'arrière-plan du texte.

9. Système suivant la revendication 6, 7 ou 8, dans lequel les zones (212 à 220 ; 302 à 310) de saisie de données comprennent une zone (220 ; 304) de saisie relative à une image, pour saisir des données déterminant la couleur des données image à imprimer.

**10.** Système d'impression suivant l'une quelconque des revendications 1 à 9, comprenant :

une imprimante (12) comprenant les moyens (78, 80) d'impression ; et
un pilote d'imprimante pour commander l'imprimante (12), le pilote d'imprimante comprenant :

le moyen (34) de mémorisation, le moyen (30) de traitement de données à imprimer et un moyen (32) de transmission pour envoyer les données d'impression polychrome à l'imprimante (12).

**11.** Système d'impression suivant l'une quelconque des revendications 1 à 9, dans lequel les moyens d'extraction de données à imprimer comprennent un moyen (52) de réception, destiné à recevoir des instructions et des données à imprimer provenant d'un hôte.

**12.** Utilisation du système d'impression, tel que défini dans l'une quelconque des revendications 1 à 11, dans un système PDV (point de vente), comprenant une unité d'exécution d'application PDV pour mettre en tableau des informations de ventes, sur la base d'informations de produits achetés, introduites via un dispositif (14) d'entrée, et pour émettre en sortie les données d'impression monochrome pour imprimer un reçu.

**13.** Procédé pour réaliser une impression en deux couleurs ou davantage, en réponse à des données d'impression monochrome, comprenant les étapes consistant à :

(a) extraire des données d'impression monochrome ;
(b) interpréter les données à imprimer extraites et déterminer si les données à imprimer sont des données texte ou des données image ;
(c) mémoriser des informations de colorisation définissant un traitement de colorisation à appliquer aux données texte et/ou aux données image ;
(d) appliquer le traitement de colorisation aux données d'impression monochrome et produire des données d'impression polychrome, en réponse à l'étape (b) et aux informations de colorisation ; et
(e) commander le moyen d'impression pouvant imprimer en deux couleurs ou davantage, conformément aux données d'impression polychrome, obtenues à l'étape (d).

**14.** Procédé suivant la revendication 13 comprenant en outre, les étapes consistant à :

(f) présenter une page de saisie de données contentant les zones (212 à 220 ; 302 à 310) de saisie, pour saisir les informations de colorisation pour chacun des éléments d'information déterminés à l'avance ;
(g) régler les informations de colorisation, sur la base du contenu saisi dans chaque zone de saisie ;
(h) produire un modèle de reçu, sur la base des informations de colorisation réglées ; et
(i) afficher ou imprimer le modèle de reçu.

**15.** Programme d'instructions qui, lorsqu'il est lancé dans un système d'impression, fait que le procédé, tel que défini dans la revendication 13 ou 14, s'exécute.

**16.** Support d'enregistrement pouvant être lu par un ordinateur, comportant le programme de la revendication 15.

**FIG. 1**

FIG. 2

FIG. 3

POS APPLICATION PROGRAM  24

CONTROL OBJECT  20

22

DATA PROCESSING PART  30

COMMAND OUTPUT PART  32

PRINTER  12

COLORIZATION INFORMATION STORAGE UNIT  34

COLORIZATION FLAG  36

COLORIZATION INFORMATION  38

COLORIZATION INFORMATION SETUP UNIT  40

10

COLORIZATION INFORMATION

38

| INFORMATION ITEM | VALUE |
|---|---|
| LINE UNIT | n (INTEGER) |
| COLORIZATION METHOD | TEXT COLOR OR BACKGROUND COLOR |
| BACKGROUND PATTERN | HALFTONE, DIAGONAL SLASHES, SOLID FILL |
| BACKGROUND TONE | DARK, MEDIUM, LIGHT |
| IMAGE COLOR | FIRST COLOR OR SECOND COLOR |

# FIG. 4

| | | | |
|---|---|---|---|
| **SHINSHYU GROCERS, SHIOJIRI STORE** | | | |
| | | 2002.FEB.14 | } 2 LINES |
| BEEF | | 500 G | 1,380 | } |
| EGGS | 10 | 200 | } 2 LINES |
| MILK | 1 LTR | 178 | |
| ORANGE JUICE | 1 PK | 210 | } 2 LINES |
| CHOCOLATE | 2 | 230 | |
| CARROTS | | 430 | } 2 LINES |
| LETTUCE | | 150 | |
| CUP NOODLE | 5 | 620 | } 2 LINES |
| BUN | 3 | 300 | |
| DETERGENT | I CASE | 520 | } 2 LINES |
| TOILET PAPER | 1 PK | 398 | |
| TISSUE PAPER | 5 | 298 | } 2 LINES |
| TOTAL | | 4,914 | |

# FIG. 5

START

S100 PRINT DATA DETECTED? — NO

YES

S102 COLORIZATION FLAG SET? — NO

YES

S106 TEXT OR IMAGE — IMAGE

TEXT

S110 IMAGE COLOR = FIRST COLOR? — NO

YES

S108 COLORIZATION PROCESS

S112 GENERATE IMAGE PRINT COMMAND FOR SECOND COLOR

S104 GENERATE MONOCHROME PRINT COMMAND

S114 SEND PRINT COMMAND TO PRINTER

END

FIG. 6

FIG. 7

BASIC
SETTINGS

CONVERSION
SETTINGS

PAPER SIZE (WIDTH)
○ 56mm
● 70mm
○ 85mm

202

204

COLOR CONVERSION
●CONVERT
○ DO NOT CONVERT

200

PRINT
SAMPLE
D   P

206

205

OK

222

# FIG. 8

BASIC SETTINGS / CONVERSION SETTINGS

212 COLORIZATION METHOD
● TEXT COLOR   O BACKGROUND COLOR

210

214 LINE UNIT
[ 1 ▲▼ ]

BACKGROUND PATTERN
216 ● HALFTONE
O DIAGONAL SLASHES —
O SOLID FILL

O DARK
● MEDIUM   218
O LIGHT

220 IMAGE COLOR
● FIRST COLOR   O SECOND COLOR

[ OK ]

222

# FIG. 9

38 COLORIZATION INFORMATION

| INFORMATION ITEM | VALUE |
|---|---|
| LINE UNIT | n (INTEGER) |
| BACKGROUND COLOR | FIRST COLOR OR SECOND COLOR |
| BACKGROUND PATTERN | HALFTONE, DIAGONAL SLASHES, SOLID FILL |
| BACKGROUND DENSITY | DARK, MEDIUM, LIGHT |
| TEXT COLOR | FIRST COLOR OR SECOND COLOR |
| IMAGE COLOR | FIRST COLOR OR SECOND COLOR |

# FIG. 10

```
 ┌──────────┐ ┌──────────────┐
 │  BASIC   │ │ CONVERSION   │
 │ SETTINGS │ │  SETTINGS    │
 └──────────┘ └──────────────┘
```

TEXT COLOR
    ● FIRST COLOR    O SECOND COLOR

BACKGROUND COLOR
    O FIRST COLOR    ● SECOND COLOR

LINE UNIT    [   1   ▲▼ ]

BACKGROUND PATTERN
    ● HALFTONE           O DARK
    O DIAGONAL SLASHES   ● MEDIUM
    O SOLID FILL          O LIGHT

IMAGE COLOR
    ● FIRST COLOR    O SECOND COLOR

[ OK ]

# FIG. 11

38 COLORIZATION INFORMATION

| INFORMATION ITEM | VALUE |
|---|---|
| LINE UNIT | n (INTEGER) |
| BACKGROUND COLOR | FIRST COLOR, SECOND COLOR, MIX |
| BACKGROUND PATTERN | HALFTONE, DIAGONAL SLASHES, SOLID FILL |
| BACKGROUND DENSITY | DARK, MEDIUM, LIGHT |
| TEXT COLOR | FIRST COLOR, SECOND COLOR, MIX |
| IMAGE COLOR | FIRST COLOR, SECOND COLOR, MIX |

# FIG. 12

BASIC SETTINGS / CONVERSION SETTINGS

TEXT COLOR
● FIRST COLOR ○ SECOND COLOR ○ MIX

BACKGROUND COLOR
○ FIRST COLOR ● SECOND COLOR ○ MIX

LINE UNIT  [ 1 ▲▼ ]

BACKGROUND PATTERN
● HALFTONE              ○ DARK
○ DIAGONAL SLASHES     ● MEDIUM
○ SOLID FILL           ○ LIGHT

IMAGE COLOR
● FIRST COLOR ○ SECOND COLOR ○ MIX

[ OK ]

# FIG. 13

FIG. 14

| INFORMATION ITEM | VALUE |
|---|---|
| COLORIZATION FLAG | SET (ENABLE) OR CLEAR (DISABLE) |
| IMAGE COLOR | FIRST COLOR OR SECOND COLOR |
| TEXT COLOR | FIRST COLOR OR SECOND COLOR |
| TEXT BACKGROUND | APPLY OR NOT APPLY |
| TEXT LINE UNIT | INTEGER VALUE |

# FIG. 15

START

S300

TEXT OR
IMAGE?

IMAGE

S302 → READ IMAGE DATA

TEXT

S306

APPLY COLORIZATION
PROCESS TO TEXT

S304 → STORE IMAGE DATA IN
FIRST OR SECOND
BUFFER ACCORDING TO
colorization information

END

# FIG. 16

COLORIZATION
PROCESS

S400

APPLY
COLORIZATION PROCESS
TO CURRENT LINE?

NO

YES

S404

STORE BIT IMAGE FOR TEXT
CHARACTERS IN FIRST
OR SECOND PRINT BUFFER
ACCORDING TO THE TEXT COLOR

S406

PRINT TEXT
BACKGROUND?

NO

YES

S402

STORE TEXT IMAGE
PATTERN DATA IN
FIRST PRINT BUFFER

S408

STORE BIT IMAGE DATA
FOR BACKGROUND IN
SECOND PRINT BUFFER

RETURN

FIG. 17

CONVERSION
SETTINGS

302 — 2-COLOR PRINTING
● YES          ○ NO

304 — IMAGE COLOR
○ FIRST COLOR  ● SECOND COLOR          300

306 — TEXT COLOR
● FIRST COLOR  ○ SECOND COLOR

308 — BACKGROUND
● APPLY        ○ DO NOT APPLY

310 — LINE UNIT

1 ▲▼

OK — 312

# FIG. 18